# EUROPÄISCHE PATENTSCHRIFT

(11) **EP 2 636 948 B1**
(45) Veröffentlichungstag und Bekanntmachung des Hinweises auf die Patenterteilung: **07.09.2016**
(21) Anmeldenummer: 13158328.8
(22) Anmeldetag: 08.03.2013
(51) Int. Cl.: F21V 23/04, F21K 9/232, F21Y 115/10

(54) **LED-Lampe und Verfahren zum Betreiben einer derartigen Lampe**
LED lamp and method for operating such a lamp
Lampe DEL et procédé de fonctionnement d'une telle lampe

(30) Priorität: 09.03.2012 DE 102012203748
(43) Veröffentlichungstag der Anmeldung: 11.09.2013
(73) Patentinhaber: Zumtobel Lighting GmbH, 6850 Dornbirn (AT)
(72) Erfinder: Vamberszky, Klaus, 6900 Bregenz (AT)
(74) Vertreter: Thun, Clemens

(56) Entgegenhaltungen:
- EP-A1- 1 106 432
- WO-A1-03/008858
- WO-A1-2010/150207
- DE-A1-102009 010 180

## Beschreibung

Die vorliegende Erfindung betrifft eine LED-Lampe mit einer oder mehreren Leuchtdioden als Lichtquelle. Insbesondere betrifft die vorliegende Erfindung eine so genannte Retrofit-LED-Lampe, welche als Ersatz für klassische Halogenlampen oder Glühlampen vorgesehen ist, sowie ein Verfahren zum Betreiben einer derartigen Lampe.

Die Weiterentwicklung klassischer Leuchtdioden auf Halbleiterbasis oder so genannter organischer Leuchtdioden, OLEDs, hat dazu geführt, dass derartige Lichtquellen immer häufiger zu Beleuchtungszwecken eingesetzt werden. Leuchtdioden zeichnen sich im Vergleich zu klassischen Lichtquellen wie Glühlampen oder Leuchtstofflampen durch ihre hohe Lichteffizienz und ihre Langlebigkeit aus. Des Weiteren handelt es sich in der Regel um Lichtquellen mit äußerst geringen Abmessungen, was einen sehr flexiblen Einsatz ermöglicht. Ein weiterer Vorteil dieser Lichtquellen besteht schließlich darin, dass diese verhältnismäßig einfach in ihrer Helligkeit verändert, also gedimmt werden können. Dies erlaubt es, mittels mehrfarbiger LED-Module beliebige Mischfarben oder Farbtemperaturen zu erzeugen. Eine Veränderung der Helligkeit der einzelnen LEDs erfolgt dabei in der Regel über eine PWM-Ansteuerung mit Hilfe einer entsprechenden Treiberschaltung.

Ein besonderes Anwendungsgebiet derartiger Lichtquellen besteht in so genannten Retrofit-LED-Lampen. Es handelt sich hierbei um Lampen mit einer oder mehreren Leuchtdioden als Lichtquellen, wobei die LED-Lampe die Form und Funktion beispielsweise einer konventionellen Glühbirne aufweist. Dies bedeutet insbesondere, dass die Lampe mit einem Sockel versehen ist, der das Einschrauben in herkömmliche Glühlampen-Fassungen ermöglicht. Intern ist dann eine entsprechende Elektronik, insbesondere eine Treiberschaltung vorgesehen, welche die allgemeine Netzspannung in einen geeigneten Versorgungsstrom zum Betreiben der Leuchtdioden umsetzt. Auch hinsichtlich ihrer weiteren Form entsprechen derartige Retrofit-LED-Lampen klassischen Glühbirnen, d.h., sie weisen einen transparenten oder transluzenten Hohlkörper in Birnenform auf, in dem die Leuchtdioden angeordnet sind. Mit derartigen Retrofitlampen können allerdings nicht nur konventionelle Glühbirnen sondern beispielsweise auch Halogenlampen oder dergleichen ersetzt werden.

Eine Besonderheit derartiger Retrofit-LED-Lampen besteht darin, dass die als Lichtquellen dienenden Leuchtdioden üblicherweise auf einer Platine angeordnet sind und dementsprechend Licht primär in einen bestimmten Raumbereich abstrahlen, im Gegensatz zu dem Glühdraht einer klassischen Glühbirne, über den - abgesehen von dem Sockelbereich der Glühbirne - eine allumfängliche Lichtabstrahlung erzielt wird. Zwar kann auch bei Retrofit-LED-Lampen mit Hilfe entsprechender Optiken und/oder einer Vielzahl von unterschiedlich ausgerichteten Leuchtdioden eine vollumfängliche Lichtabstrahlung erzielt werden, in manchen Fällen ist dies allerdings gar nicht sinnvoll bzw. gar nicht gewünscht.

Die DE102009010180A1 (Osram) offenbart eine Leuchtvorrichtung mit mindestens einer Halbleiterlichtquelle, wobei die Leuchtvorrichtung mindestens einen Sensor und eine mit dem mindestens einen Sensor funktional verbundene Auswerteelektronik aufweist, wobei die Auswerteelektronik dazu eingerichtet ist, auf mindestens ein vorbestimmtes Sensorsignal des mindestens einen Sensors mindestens eine Handlung der Leuchtvorrichtung auszulösen. Alle LEDs sind jedoch in gleicher Richtung ausgerichtet. Nicht offenbart ist daher, dass die Leuchtdioden teilweise verschieden ausgerichtet sind, wobei die Treiberschaltung dazu ausgebildet ist, bei dem Betreiben der Leuchtdioden deren Ausrichtung bzw. Ausrichtungen zu berücksichtigen.

Der vorliegenden Erfindung liegt deshalb die Aufgabenstellung zugrunde, bei LED-Lampen der zuvor beschriebenen Art die Ansteuerung der Lichtquellen zu optimieren.

Die Aufgabe wird durch eine LED-Lampe, welche die Merkmale des Anspruchs 1 aufweist, sowie durch ein Verfahren gemäß Anspruch 9 gelöst. Vorteilhafte Weiterbildungen der Erfindung sind Gegenstand der abhängigen Ansprüche.

Erfindungsgemäß wird dementsprechend eine LED-Lampe, insbesondere eine Retrofit-LED-Lampe vorgeschlagen, welche mindestens eine Leuchtdiode sowie eine Treiberschaltung zur Stromversorgung der Leuchtdiode aufweist, wobei die LED-Lampe ferner Mittel zum Erfassen der Ausrichtung bzw. Orientierung der LED-Lampe aufweist und die Treiberschaltung dazu ausgebildet ist, die Leuchtdiode abhängig von der erfassten Ausrichtung bzw. Orientierung der LED-Lampe zu betreiben.

Dabei weist die erfindungsgemäße LED-Lampe mehrere Leuchtdioden auf, welche zumindest teilweise verschieden ausgerichtet sind, wobei die Treiberschaltung dann dazu ausgebildet ist, bei dem Betreiben der LEDs deren Ausrichtung bzw. Ausrichtungen zu berücksichtigen. In diesem Fall wird also abhängig von der Lage der LED-Lampe eine unterschiedliche Lichtverteilung erzeugt. Ergänzend oder alternativ hierzu kann auch vorgesehen sein, dass die LED-Lampe mehrere Leuchtdioden aufweist, denen jeweils eine Optik zur Beeinflussung des von der jeweiligen Leuchtdiode emittierten Lichts zugeordnet ist, wobei die Optiken der Leuchtdioden zumindest teilweise unterschiedlich sind und die Treiberschaltung wiederum dazu ausgebildet ist, eine Ansteuerung der Leuchtdioden entsprechend der erfassten Ausrichtung bzw. Orientierung sowie unter Berücksichtigung der Optiken vorzunehmen. Auch in diesem Fall wird also die Lichtverteilung an die erfasste Lage der LED-Lampe angepasst. Dabei sind vorzugsweise mehrere Leuchtdioden jeweils zu Gruppen zusammengefasst, wobei die Leuchtdioden einer Gruppe jeweils parallel zueinander ausgerichtet sind und/oder identische Optiken aufweisen und die Treiberschaltung dazu ausgebildet ist, die Leuchtdioden einer Gruppe einheitlich zu betreiben.

Das erfindungsgemäße Konzept ist allerdings nicht auf LED-Lampen beschränkt, bei denen die Leuchtdioden zumindest teilweise unterschiedlich ausgerichtet oder mit unterschiedlichen Optiken versehen sind. Eine lageabhängige Ansteuerung der Leuchtdioden kann auch dann sinnvoll sein, wenn alle Leuchtdioden identisch ausgerichtet und mit identischen Optiken versehen sind. Insbesondere kann hierbei berücksichtigt werden, dass je nach Ausrichtung der LED-Lampe die während des Betriebs der Leuchtdioden erzeugte Wärme unterschiedlich effektiv abgeführt werden kann, was dann von der Treiberschaltung wiederum berücksichtigt wird, um einen dauerhaft zuverlässigen Betrieb der Lampe gewährleisten zu können.

Das lageabhängige Betreiben der Leuchtdiode bzw. Leuchtdioden erfolgt dabei mit Hilfe eines vorgegebenen Schemas, welches in der Elektronik der Treiberschaltung hinterlegt ist. Dabei kann gemäß einer vorteilhaften Weiterbildung der Erfindung auch vorgesehen sein, dass dieses Schema modifizierbar bzw. extern vorgebbar ist. In diesem Fall weist die LED-Lampe eine entsprechende Schnittstelle zum Zuführen entsprechender Informationen auf. Es kann sich hierbei um eine separate Schnittstelle zum Anschließen eines geeigneten Programmiergeräts oder zur drahtlosen Übermittlung der Informationen handeln, denkbar wäre insbesondere beim Einsatz von Retrofit-LED-Lampen allerdings auch, die Information mittels der bekannten Powerline-Technologie zu übertragen.

Nachfolgend soll die Erfindung anhand der beiliegenden Zeichnung näher erläutert werden. Es zeigen:
- Figur 1: ein Ausführungsbeispiel einer erfindungsgemäßen LED-Lampe in seitlicher Ansicht;
- Figur 2: ein Blockschaltbild der wesentlichen Komponenten der erfindungsgemäßen LED-Lampe;
- Figuren 3a und 3b: eine erste denkbare Variante zur lageabhängigen Ansteuerung der erfindungsgemäßen LED-Lampe;
- Figuren 4a und 4b: eine zweite Variante zur lageabhängigen Ansteuerung der erfindungsgemäßen LED-Lampe und
- Figuren 5a und 5b: eine dritte Variante zur lageabhängigen Ansteuerung der erfindungsgemäßen LED-Lampe.

Nachfolgend wird die Erfindung anhand eines bevorzugten Ausführungsbeispiels in Form einer sog. Retrofit-Glühbirne beschrieben. Es sei allerdings darauf hingewiesen, dass das erfindungsgemäße Konzept nicht auf derartige Glühbirnen beschränkt ist sondern generell bei LED-Lampen zum Einsatz kommen kann. Insbesondere wären auch Retrofit-Halogenlampen entsprechend der vorliegenden Erfindung denkbar.

Ferner werden nachfolgend als Lichtquellen der erfindungsgemäßen LED-Lampe in erster Linie Leuchtdioden auf Halbleiterbasis, also klassische LEDs beschrieben. In gleicher Weise könnte allerdings die erfindungsgemäße lageabhängige Ansteuerung auch bei so genannten organischen LEDs (OLEDs) erfolgen.

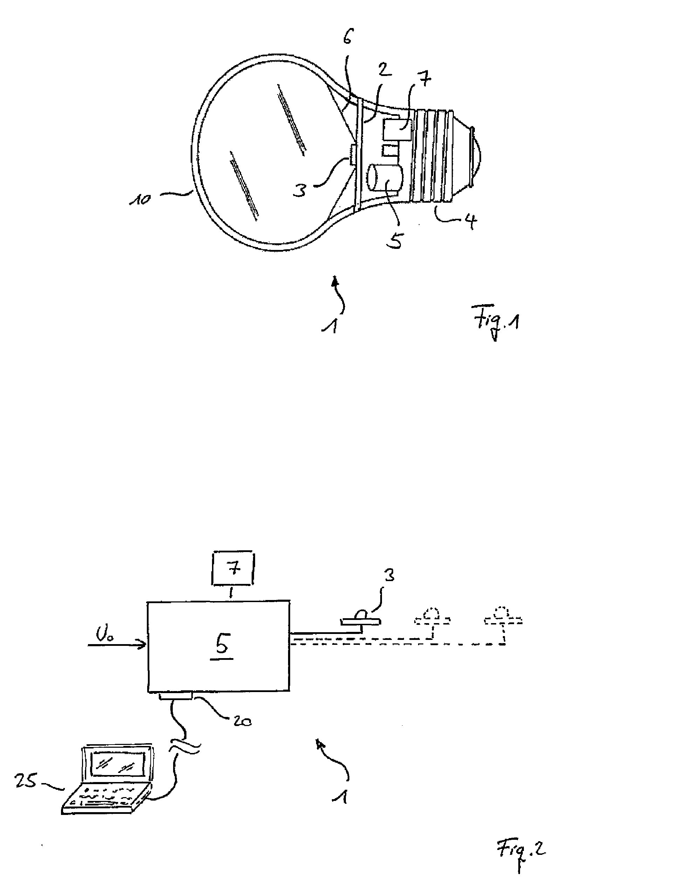

Die in Figur 1 in seitlicher Ansicht und in Figur 2 schematisch dargestellte erfindungsgemäße LED-Lampe 1 ist als Retrofit-Lampe ausgestaltet, also für den Anschluss an konventionellen Netzstrom vorgesehen. Hierfür weist die Lampe 1 zunächst einen Sockel 4 zum Einschrauben in konventionelle Netzstromfassungen auf. Im Falle einer Retrofit-Halogenlampe würde der Sockel 4 durch entsprechende Stift-Kontakte ersetzt werden. Als Lichtquelle ist ein LED-Chip 3 auf einem Träger 2 angeordnet, wobei es sich bei dem Träger 2 um ein entsprechendes Substrat handelt, welches beispielsweise aus Silicium oder einer Siliciumverbindung besteht.

Im dargestellten Ausführungsbeispiel ist lediglich eine einzelne Leuchtdiode 3 dargestellt, wie später noch näher erläutert wird, kann allerdings die Anzahl der zum Einsatz kommenden Leuchtdioden auch deutlich größer sein und diese können sich hinsichtlich ihrer Orientierung und/oder zugeordneten optischen Mittel unterscheiden.

Die erfindungsgemäße LED-Lampe 1 weist weiterhin eine Elektronik auf, deren Bauteile unterhalb des Trägers 2 angeordnet sind. Diese Elektronik umfasst insbesondere eine Treiberschaltung 5 zum Ansteuern der Leuchtdiode 3. Die Treiberschaltung 5 ist dabei dazu ausgebildet, die Netzspannung U₀ von beispielsweise 220 Volt oder 110 Volt auf eine zum Betrieb der Leuchtdiode 3 geeignete Spannung herabzusetzen. Dabei wird - wie im Stand der Technik üblich - vorzugsweise der Versorgungswechselstrom in eine Gleichspannung umgesetzt, welche zur Einstellung der Helligkeit der Leuchtdiode 3 beispielsweise PWM-moduliert sein kann. Diese aus dem Stand der Technik bekannte Maßnahme hat sich als besonders effizient zum Dimmen von LEDs herausgestellt. Der Leuchtdiode 3 kann dabei auch eine entsprechende Optik zur Beeinflussung der Lichtabgabe zugeordnet sein, welche im dargestellten Ausführungsbeispiel durch einen sich von der Leuchtdiode 3 konisch erweiternden Reflektor 6 gebildet ist.

Hinsichtlich des bisher beschriebenen Aufbaus entspricht die in den Figuren 1 und 2 dargestellte LED-Lampe 1 dem Aufbau klassischer Retrofit-LED-Glühbirnen. Eine Besonderheit der erfindungsgemäßen LED-Lampe 1 besteht nunmehr darin, dass diese zusätzlich einen integrierten Sensor 7 zum Erfassen der Einbaulage der Lampe 1 aufweist. Aufgabe dieses Sensors 7 ist es, die Ausrichtung bzw. Orientierung der Lampe 1 zu erfassen und eine entsprechende Information der Steuerelektronik bzw. Treiberschaltung 5 zur Verfügung zu stellen. Derartige Sensoren sind bekannt und können beispielsweise durch Quecksilberschalter oder Anordnungen bestehend aus einer Kugel mit einer entsprechenden Anordnung von Mikroschaltern realisiert werden. Insbesondere ist der Sensor 7 in der Lage zu erkennen, ob die Lampe 1 nach oben, nach unten oder seitlich ausgerichtet ist.

Die von dem Sensor 7 zur Verfügung gestellten Informationen werden erfindungsgemäß dann von der Treiberschaltung 5 beim Betreiben der Leuchtdiode 3 berücksichtigt. Es erfolgt also durch die LED-Lampe 1 ein lageabhängiger Betrieb der Leuchtdiode 3, ohne dass der Lampe 1 hierfür extern irgendwelche Informationen zugeführt werden. In dieser Hinsicht unterscheidet sich die erfindungsgemäße Lampe 1 auch von Lösungen, wie sie beispielsweise von Stehleuchten her bekannt sind, bei denen die Stehleuchte einen Sensor beinhaltet, der ein Kippen der Leuchte erkennt und dann den Leuchtenbetrieb deaktiviert. Demgegenüber erfolgt bei der erfindungsgemäßen LED-Lampe 1 abhängig von der erfassten Lage ein angepasster Betrieb (kein reines Ein- und Ausschalten) und die Sensorinformationen stehen intern zur Verfügung und werden nicht von einem externen Mittel zur Verfügung gestellt.

Ein lageabhängiger Betrieb der Leuchtdiode bzw. Leuchtdioden kann nunmehr in unterschiedlicher Weise erfolgen. Anhand der nachfolgend beschriebenen Figuren werden drei denkbare Varianten erläutert, bei denen abhängig von der Orientierung der Lampe 1 der Betrieb entsprechend modifiziert wird. Selbstverständlich ist dieses Konzept allerdings auch auf weitere Situation anwendbar.

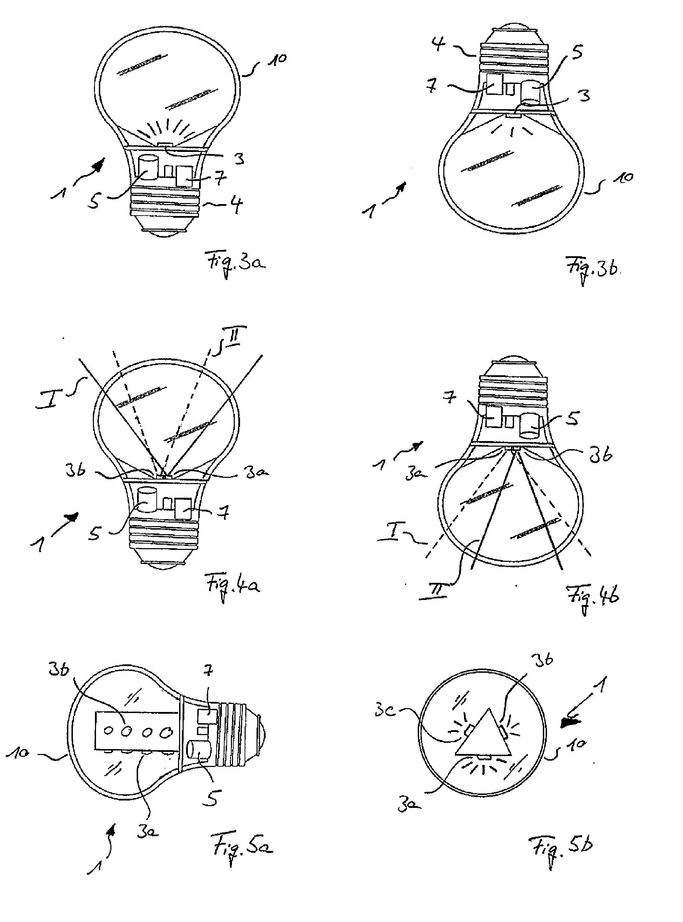

Bei dem in den Figuren 3a und 3b dargestellten Ausführungsbeispiel wird davon ausgegangen, dass tatsächlich lediglich eine einzige Leuchtdiode 3 zum Einsatz kommt, wie dies auch bei den Figuren 1 und 2 der Fall war. Dabei ist in Figur 3a ein Einbau der Lampe 1 in einer nach oben gerichteten Ausrichtung vorgesehen, während hingegen bei der Variante gemäß Figur 3b die Lampe 1 zur Unterseite hin gerichtet ist. Beide Einbausituationen unterscheiden sich dahingehend, dass die während des Betriebs der Leuchtdiode 3 auftretende Wärme bei der in Figur 3a dargestellten Orientierung der Lampe 1 besser abgeführt wird als bei einer Anordnung gemäß Figur 3b. Grund hierfür ist, dass für den Fall, dass die Lampe 1 nach oben weist, die Wärme effizienter über den transparenten Körper 10 der Lampe 1 abgegeben wird, während hingegen im Fall von Figur 3b die aufsteigende Wärme zu einer zusätzlichen thermischen Belastung für die sich in der Nähe des Sockels 4 befindliche Elektronik führen kann.

Gemäß der vorliegenden Erfindung ist dementsprechend nunmehr vorgesehen, dass die Ausrichtung der Lampe 1 durch den Sensor 7 erkannt und die entsprechende Information der Treiberschaltung 5 zur Verfügung gestellt wird. Diese berücksichtigt nunmehr die erfasste Einbaulage der Lampe 1 und betreibt beispielsweise bei der Ausrichtung gemäß Figur 3a die Leuchtdiode 3 mit einer höheren Leistung, während hingegen im Vergleich dazu bei einer Einbaulage gemäß Figur 3b die Leistung reduziert wird. Durch das Reduzieren der Leistung bei einer Einbaulage gemäß Figur 3b kann dann sichergestellt werden, dass auch in diesem Fall ein dauerhafter Betrieb der LED-Lampe 1 zu keiner thermischen Überlastung der Elektronik führt.

Das in dem Ausführungsbeispiel gemäß der Figuren 3a und 3b dargestellte Schema könnte auch dahingehend modifiziert werden, dass im Falle eines Dimmbetriebs der Lampe 1 bei einer Einbaulage gemäß Figur 3a ein Dimmen bis zur maximalen Leistung der Leuchtdiode 3 erlaubt wird, während hingegen bei der Einbaulage gemäß Figur 3b die Treiberschaltung ein Dimmen lediglich innerhalb eines reduzierten Bereichs (beispielsweise bis zu 66% der Maximalleistung) erlaubt, höhere Dimmsignale dann allerdings nicht mehr in höhere Leistungen umsetzt.

Ferner besteht eine entsprechende Möglichkeit zur Ansteuerung gemäß dem in den Figuren 3a und 3b dargestellten Beispiel selbstverständlich auch dann, wenn anstelle einer einzelnen Leuchtdiode mehrere - ggf. auch verschiedenfarbige - Leuchtdioden als Lichtquellen verwendet werden.

Eine zweite denkbare Möglichkeit zur lageabhängigen Ansteuerung ist in den Figuren 4a und 4b dargestellt. In diesem Fall weist die Lampe zwei Leuchtdioden bzw. zwei Gruppen von Leuchtdioden 3a und 3b auf, denen unterschiedliche Optiken zugeordnet sind. Diese Optiken, die sich in unmittelbarer Nähe der entsprechenden Leuchtdioden 3a, 3b befinden und durch Linsen und/oder Reflektoren gebildet sind, sind üblicherweise dazu vorgesehen, das von der zugehörigen LED in der Regel in einem sehr großen Winkelbereich abgestrahlte Licht auf einen kleineren Winkelbereich zu beschränken, wobei im vorliegenden Ausführungsbeispiel die Optik oder Optiken der ersten Leuchtdiode(n) 3a eine Abstrahlung in einen größeren Raumbereich I bewirken, während hingegen der Raumbereich II der Optike(n) der zweiten Leuchtdiode(n) 3b enger bemessen ist. Je nachdem, welche der beiden Leuchtdioden 3a bzw. 3b aktiviert ist, erfolgt also eine Lichtabgabe durch die LED-Lampe 1 in einem größeren oder kleineren Winkelbereich.

Bei dem in den Figuren 4a und 4b dargestellten Beispiel wird nun die von dem Sensor 7 erfasste Orientierung der Lampe 1 von der Treiberschaltung 5 dahingehend interpretiert, dass bei einer Orientierung gemäß Figur 4a die Lampe nach oben, also beispielsweise gegen eine Decke eines zu beleuchtenden Raums gerichtet ist, während hingegen bei einer Orientierung gemäß Figur 4b die Lampe 1 nach unten gerichtet und damit zur Direktbeleuchtung vorgesehen ist. Üblicherweise ist für eine entsprechende Direktbeleuchtung eine stärker gebündelte Lichtabgabe von Vorteil, während hingegen bei einer Indirektbeleuchtung gemäß Figur 4a eine Lichtabgabe in einem größeren Winkelbereich gewünscht ist.

Gemäß dem Ausführungsbeispiel ist dementsprechend vorgesehen, dass bei einer Orientierung entsprechend Figur 4a die erste LED 3a mit der größeren Winkelverteilung aktiviert wird bzw. zumindest mit einer höheren Intensität als die zweite LED 3b betrieben wird, während hingegen die Intensitäten bei der Ausrichtung zur Unterseite hin gemäß Figur 4b vertauscht werden. Die Lampe 1 erkennt also selbstständig, ob sie der Direkt- oder Indirektbeleuchtung dient und passt entsprechend die Lichtabgabe hierzu an.

Ein drittes Anwendungsbeispiel der Erfindung ist in den Figuren 5a und 5b dargestellt, wobei in diesem Fall nunmehr mehrere Leuchtdioden 3a, 3b und 3c zum Einsatz kommen, welche auf unterschiedlich orientierten Trägern angeordnet sind. Bei dem dargestellten Ausführungsbeispiel ist die Lampe 1, die in Fig. 5b von vorne gezeigt ist, in horizontaler Lage eingebaut, was üblicherweise dann der Fall ist, wenn das von der Lampe abgegebene Licht sowohl zur Ober- als auch zur Unterseite hin abgestrahlt werden soll, um eine kombinierte Direkt-/Indirektbeleuchtung zu erzielen. Üblicherweise ist in derartigen Fällen allerdings eine intensivere Lichtabgabe zur Unterseite hin gewünscht, weshalb nach entsprechendem Erfassen der dargestellten Einbaulage durch den Sensor 7 die Treiberschaltung 5 die verschieden orientierten LEDs 3a, 3b und 3c nunmehr derart ansteuert, dass die zur Unterseite hin gerichteten LEDs 3a mit einer höheren Leistung betrieben werden als die mehr nach oben ausgerichteten LEDs 3b und 3c. Wiederum passt also die Lampe 1 die Lichtabgabe hinsichtlich der räumlichen Verteilung selbstständig an.

Es ist offensichtlich, dass die anhand der Figuren beschriebenen drei verschiedenen Ausführungsbeispiele in vielfältiger Weise variiert oder kombiniert werden können. Insbesondere wäre auch eine Kombination der beiden Beispiele der Figuren 3 und 4 denkbar. Grundsätzlich steht allerdings der Treiberschaltung 5 eine entsprechend hinterlegte Information zur Verfügung, nach welchen Schema die zu betreibenden Leuchtdioden abhängig von der von dem Sensor 7 erfassten Einbaulage anzusteuern sind.

Dabei wäre es denkbar, dass die entsprechenden Regeln zum Ansteuern der Leuchtdioden werksseitig einprogrammiert werden, allerdings alternativ oder ergänzend hierzu durch den späteren Benutzer auch modifiziert werden können. Gemäß einer vorteilhaften Weiterbildung der Erfindung kann dementsprechend die Lampe 1 eine Schnittstelle 20 (siehe Figur 2) aufweisen, welche das externe Zuführen entsprechender Informationen ermöglicht. Diese Schnittstelle kann zum Verbinden mit einem externen Programmiergerät, beispielsweise einem PC 25 ausgebildet sein, wie in Figur 2 angedeutet ist. Alternativ hierzu wäre auch eine drahtlose Übermittlung denkbar. Schließlich wäre es auch möglich, entsprechende Informationen über die allgemeine Stromversorgung mittels der bekannten Powerline-Technologie zu übertragen.

Letztendlich gestattet allerdings die erfindungsgemäße Lösung, dass der Betrieb der Leuchtdioden effektiv an die Einbaulage der LED-Lampe angepasst wird, wodurch der Betrieb der Lampe aber auch die von der Lampe erzeugte Lichtabgabe optimiert wird.

## Patentansprüche

1. Retrofit-LED-Lampe (1)mit mindestens einer Leuchtdiode (LED, 3) sowie einer Treiberschaltung (5) zur Stromversorgung der Leuchtdiode (3), wobei die Retrofit-LED-Lampe (1) ferner Mittel (7) zum Erfassen der Ausrichtung bzw. Orientierung der Retrofit-LED-Lampe (1) aufweist und die Treiberschaltung (5) dazu ausgebildet ist, die Leuchtdiode (3) abhängig von der erfassten Ausrichtung bzw. Orientierung der Retrofit-LED-Lampe (1) zu betreiben,
**dadurch gekennzeichnet, dass**
diese mehrere Leuchtdioden (3) aufweist, welche zumindest teilweise verschieden ausgerichtet sind, wobei die Treiberschaltung (5) dazu ausgebildet ist, bei dem Betreiben der Leuchtdioden (3) deren Ausrichtung bzw. Ausrichtungen zu berücksichtigen.

2. Retrofit-LED-Lampe nach Anspruch 1,
**dadurch gekennzeichnet,**
**dass** die Treiberschaltung (5) dazu ausgebildet ist, abhängig von der Ausrichtung bzw. Orientierung der Retrofit-LED-Lampe (1) die räumliche Lichtabgabe zu beeinflussen.

3. Retrofit-LED-Lampe nach Anspruch 2 ,
**dadurch gekennzeichnet,**
**dass** diese mehrere Leuchtdioden (3) aufweist, denen jeweils eine Optik zur Beeinflussung des von der jeweiligen Leuchtdiode (3) emittierten Lichts zugeordnet ist, wobei die Optiken zumindest teilweise unterschiedlich sind und die Treiberschaltung (5) dazu ausgebildet ist, bei dem Betreiben der Leuchtdioden (3) deren Optiken zu berücksichtigen.

4. Retrofit-LED-Lampe nach Anspruch 2 oder 3 ,
**dadurch gekennzeichnet,**
**dass** mehrere Leuchtdioden (3) jeweils zu Gruppen zusammengefasst sind, wobei die Leuchtdioden (3) einer Gruppe jeweils parallel zueinander ausgerichtet sind und/oder identische Optiken aufweisen und die Treiberschaltung (5) dazu ausgebildet ist, die Leuchtdioden (3) einer Gruppe einheitlich zu betreiben.

5. Retrofit-LED-Lampe nach einem der vorherigen Ansprüche,
**dadurch gekennzeichnet,**
**dass** die Treiberschaltung (5) dazu ausgebildet ist, abhängig von der Ausrichtung bzw. Orientierung der Retrofit-LED-Lampe (1) die Intensität der Lichtabgabe bzw. die in einem Dimmbetrieb maximal zulässige Intensität einzustellen.

6. Retrofit-LED-Lampe nach einem der vorherigen Ansprüche,
**dadurch gekennzeichnet,**
**dass** die Treiberschaltung (5) die Leuchtdiode (3) bzw. Leuchtdioden entsprechend einem vorgegebenen Schema betreibt.

7. Retrofit-LED-Lampe nach Anspruch 6,
**dadurch gekennzeichnet,**
**dass** diese eine Schnittstelle (20) zum Übermitteln eines extern vorgegebenen Ansteuerschemas für die Treiberschaltung (5) aufweist.

8. Retrofit-LED-Lampe nach einem der vorherigen Ansprüche,
**dadurch gekennzeichnet,**
**dass** die Leuchtedioden (3) durch LEDs oder OLEDs gebildet sind.

9. Verfahren zum Betreiben einer Retrofit-LED-Lampe (1) mit mindestens einer Leuchtdiode (LED, 3),
wobei die Ausrichtung bzw. Orientierung der Retrofit-LED-Lampe (1) erfasst und abhängig von der erfassten Ausrichtung bzw. Orientierung der Retrofit-LED-Lampe (1) die Leuchtediode (3) betrieben wird, **dadurch gekennzeichnet, dass** die Retrofit-LED-Lampe (1) mehrere Leuchtdioden (3) aufweist, wobei bei dem Betreiben der Leuchtdioden (3) deren Ausrichtung bzw. Ausrichtungen berücksichtigt werden.

10. Verfahren nach Anspruch 10,
**dadurch gekennzeichnet,**
**dass** abhängig von der Ausrichtung bzw. Orientierung der Retrofit-LED-Lampe (1) die räumliche Lichtabgabe beeinflusst wird.

11. Verfahren nach Anspruch 10,
**dadurch gekennzeichnet,**
**dass** die Retrofit-LED-Lampe (1) mehrere Leuchtdioden (3) aufweist, denen jeweils eine Optik zur Beeinflussung des von der jeweiligen Leuchtdiode (3) emittierten Lichts zugeordnet ist, wobei die Optiken zumindest teilweise unterschiedlich sind und bei dem Betreiben der Leuchtdioden (3) deren Optiken berücksichtigt werden.

12. Verfahren nach Anspruch 10 oder 11,
**dadurch gekennzeichnet,**
**dass** mehrere Leuchtdioden (3) jeweils zu Gruppen zusammengefasst sind, wobei die Leuchtdioden (3) einer Gruppe jeweils parallel zueinander ausgerichtet sind und/oder identische Optiken aufweisen und die Leuchtdioden (3) einer Gruppe einheitlich betrieben werden.

13. Verfahren nach einem der Ansprüche 9 bis 12,
**dadurch gekennzeichnet,**
**dass** abhängig von der Ausrichtung bzw. Orientierung der Retrofit-LED-Lampe (1) die Intensität der Lichtabgabe bzw. die in einem Dimmbetrieb maximal zulässige Intensität eingestellt wird.

## Claims

1. Retrofit LED lamp (1) with at least one light-emitting diode (LED, 3) as well as a driver circuit (5) for supplying the light-emitting diode (3) with power, wherein the retrofit LED lamp (1) further has means (7) for determining the alignment or orientation of the retrofit LED lamp (1) and the driver circuit (5) is configured to operate the light-emitting diode (3) depending on the determined alignment or orientation of the retrofit LED lamp (1), **characterized in that** it has several light-emitting diodes (3) which are at least partially aligned differently, wherein the driver circuit (5) is configured to take during operating of the light-emitting diodes (3) the alignment or alignments thereof into consideration.

2. Retrofit LED lamp according to claim 1, **characterized in that** the driver circuit (5) is configured to influence the spatial light emission depending on the alignment or orientation of the retrofit LED lamp (1).

3. Retrofit LED lamp according to claim 2, **characterized in that** it has several light-emitting diodes (3) to which one optical system is assigned, respectively, for influencing the light emitted by the respective light-emitting diode (3), wherein the optical systems are at least partially different and the driver circuit (5) is configured to take during the operating of the light-emitting diodes (3) the optical systems thereof into consideration.

4. Retrofit LED lamp according to claim 2 or 3, **characterized in that** the several light-emitting diodes (3) are combined to groups, respectively, wherein the light-emitting diodes (3) of a group are respectively aligned parallel to one another and/or have identical optical systems, and the driver circuit (5) is configured to uniformly operate the light-emitting diodes (3) of a group.

5. Retrofit LED lamp according to one of the preceding claims, **characterized in that** the driver circuit (5) is configured to adjust the intensity of the light emission or the maximum allowable intensity in a dimming operation depending on the alignment or orientation of the retrofit LED lamp (1).

6. Retrofit LED lamp according to one of the preceding claims, **characterized in that** the driver circuit (5) operates the light-emitting diode (3) or light-emitting diodes according to a preset scheme.

7. Retrofit LED lamp according to claim 6, **characterized in that** it has an interface (20) for transmitting an externally given actuating scheme for the driver circuit (5).

8. Retrofit LED lamp according to one of the preceding claims, **characterized in that** the light-emitting diodes (3) are formed by LEDs or OLEDs.

9. Method for operating a retrofit LED lamp (1) with at least one light-emitting diode (LED, 3), wherein the alignment or orientation of the retrofit LED lamp (1) is determined and the light-emitting diode (3) is operated depending on the determined alignment or orientation of the retrofit LED lamp (1), **characterized in that** the retrofit LED lamp (1) has several light-emitting diodes (3), wherein the alignment or alignments are being taken into consideration during the operation of the light-emitting diodes (3).

10. Method according to claim 10, **characterized in that** the spatial light emission is influenced depending on the alignment or orientation of the retrofit LED lamp (1).

11. Method according to claim 10, **characterized in that** the retrofit LED lamp (1) has several light-emitting diodes (3) to which an optical system is assigned, respectively, for influencing the light emitted by the respective light-emitting diode (3), wherein the optical systems are at least partially different, and during the operation of the light-emitting diodes (3) the optical systems thereof are taken into consideration.

12. Method according to claim 10 or 11, **characterized in that** the several light-emitting diodes (3) are combined into groups, respectively, wherein the light-emitting diodes (3) of a group are aligned, respectively, parallel to one another and/or have identical optical systems and the light-emitting diodes (3) of a group are operated uniformly.

13. Method according to one of the claims 9 to 12, **characterized in that** the intensity of the light emission or the maximum allowed intensity in a dimming operation is adjusted depending on the alignment or orientation of the retrofit LED lamp (1).

## Revendications

1. Lampe DEL rétrofit (1) comportant au moins une diode électroluminescente (DEL, 3) ainsi qu'un circuit d'attaque (5) pour alimenter en courant la diode électroluminescente (3), dans laquelle la lampe DEL rétrofit (1) comporte de plus des moyens (7) servant à déterminer l'alignement ou l'orientation de la lampe DEL rétrofit (1) et le circuit d'attaque (5) est configuré pour actionner la diode électroluminescente (3) selon l'alignement ou l'orientation déterminée de la lampe DEL rétrofit (1), **caractérisée en ce qu'**elle comporte plusieurs diodes électroluminescentes (3) étant au moins partiellement alignées différemment, dans laquelle le circuit d'attaque (5) est configuré pour prendre en considération, lors du fonctionnement des diodes électroluminescentes (3), l'alignement ou les alignements de celles-ci.

2. Lampe DEL rétrofit selon la revendication 1, **caractérisée en ce que** le circuit d'attaque (5) est configuré pour influencer l'émission spatiale de lumière selon l'alignement ou l'orientation de la lampe DEL rétrofit (1).

3. Lampe DEL rétrofit selon la revendication 2, **caractérisée en ce qu'**elle comporte plusieurs diodes électroluminescentes (3) auxquelles un système optique est attribué, respectivement, pour influencer la lumière émise par la diode électroluminescente (3) respective, dans laquelle les systèmes optiques sont au moins partiellement différents et le circuit d'attaque (5) est configuré pour prendre en considération, lors du fonctionnement des diodes électroluminescentes (3) les systèmes optiques de celles-ci.

4. Lampe DEL rétrofit selon les revendications 2 ou 3, **caractérisée en ce que** les diodes électroluminescentes (3) sont, respectivement, combinées en groupes, dans laquelle les diodes électroluminescentes (3) d'un groupe sont respectivement alignées parallèlement les unes aux autres et/ou comportent des systèmes optiques identiques, et le circuit d'attaque (5) est configuré pour actionner uniformément les diodes électroluminescentes (3) d'un groupe.

5. Lampe DEL rétrofit selon l'une des revendications précédentes, **caractérisée en ce que** le circuit d'attaque (5) est configuré pour régler l'intensité de l'émission de lumière ou l'intensité maximale admissible dans une opération de gradation selon l'alignement ou l'orientation de la lampe DEL rétrofit (1).

6. Lampe DEL rétrofit selon l'une des revendications précédentes, **caractérisée en ce que** le circuit d'attaque (5) actionne la diode électroluminescente (3) ou les diodes électroluminescentes selon un schéma préétabli.

7. Lampe DEL rétrofit selon la revendication 6, **caractérisée en ce qu'**elle comporte une interface (20) pour transmettre un schéma d'actionnement donnée externe pour le circuit d'attaque (5).

8. Lampe DEL rétrofit selon l'une des revendications précédentes, **caractérisée en ce que** les diodes électroluminescentes (3) sont formées de DEL ou de DELO.

9. Procédé destiné à actionner une lampe DEL rétrofit (1) avec au moins une diode électroluminescente (DEL, 3), dans lequel l'alignement ou l'orientation de la lampe DEL rétrofit (1) est déterminée et la diode électroluminescente (3) est actionnée selon l'alignement ou l'orientation déterminée de la lampe DEL rétrofit (1), **caractérisé en ce que** la lampe DEL rétrofit (1) comporte plusieurs diodes électroluminescentes (3), dans lequel l'alignement ou les alignements sont pris en considération lors du fonctionnement des diodes électroluminescentes (3).

10. Procédé selon la revendication 10, **caractérisé en ce que** l'émission spatiale de lumière est influencée selon l'alignement ou l'orientation de la lampe DEL rétrofit (1).

11. Procédé selon la revendication 10, **caractérisé en ce que** la lampe DEL rétrofit (1) comporte plusieurs diodes électroluminescentes (3) auxquelles un système optique est attribué, respectivement, pour influencer la lumière émise par la diode électroluminescente (3) respective, dans lequel les systèmes optiques sont au moins partiellement différents, et lors du fonctionnement des diodes électroluminescentes (3) les systèmes optiques de celles-ci sont pris en considération.

12. Procédé selon les revendications 10 ou 11, **caractérisé en ce que** les diodes électroluminescentes (3) sont, respectivement, combinées en groupes, dans lequel les diodes électroluminescentes (3) d'un groupe sont respectivement alignées parallèlement les unes aux autres et/ou comportent des systèmes optiques identiques, et les diodes électroluminescentes (3) d'un groupe sont actionnées uniformément.

13. Procédé selon l'une des revendications de 9 à 12, **caractérisé en ce que** l'intensité de l'émission lumineuse ou l'intensité maximale admissible dans une opération de gradation est réglée selon l'alignement ou l'orientation de la lampe DEL rétrofit (1).
